# EUROPÄISCHE PATENTSCHRIFT

(11) **EP 1 500 878 B1**
(45) Veröffentlichungstag und Bekanntmachung des Hinweises auf die Patenterteilung: **02.01.2013**
(21) Anmeldenummer: 04008498.0
(22) Anmeldetag: 07.04.2004
(51) Int. Cl.: F23N 5/20, F23N 1/02

(54) **Verfahren zum Beenden des Heizbetriebs eines Fahrzeugheizgeräts**
Method to terminate the operation of a vehicle heating device
Procédé pour arrêter le fonctionnement d'un dispositif de chauffage pour véhicule

(30) Priorität: 21.07.2003 DE 10333116
(43) Veröffentlichungstag der Anmeldung: 26.01.2005
(73) Patentinhaber: J. Eberspächer GmbH & Co. KG, 73730 Esslingen (DE)
(72) Erfinder: Schmidt, Oliver, 73207 Plochingen (DE)
(74) Vertreter: Ruttensperger, Bernhard

(56) Entgegenhaltungen:
- EP-A- 0 337 408
- DE-A1- 19 524 422
- DE-A1- 19 605 216
- DE-C1- 19 605 325
- JP-A- 1 019 218
- US-A- 4 395 224
- US-A- 5 127 822
- US-A- 5 617 995

## Beschreibung

Die vorliegende Erfindung betrifft ein Verfahren zum Beenden des Heizbetriebs eines Fahrzeugheizgeräts gemäß dem Oberbegriff des Anspruchs 1.

Heizgeräte, wie sie beispielsweise aus Standheizungen oder Zuheizer in Kraftfahrzeugen eingesetzt werden, umfassen im Allgemeinen in einem Brennkammergehäuse eine Brennkammer, in welches vermittels einer Brennstoffzuführanordnung, also beispielsweise einer Dosierpumpe oder dergleichen, flüssiger Brennstoff eingespeist werden kann. Bei Aufbau nach Art eines Zerstäuberbrenners findet die Einspeisung unter Druck über eine Zerstäuberdüse statt. Bei Aufbau nach Art eines Verdampferbrenners wird im Allgemeinen der flüssige Brennstoff in ein poröses Verdampfermedium geleitet, darin durch Kapillarwirkung weiter gefördert und an der der Brennkammer zugewandten Seite des porösen Verdampfermediums dann in die Brennkammer abgedampft. Im Allgemeinen ist weiter eine Verbrennungsluftzuführanordnung, also ein Verbrennungsluftgebläse vorgesehen, durch welches die zum Erzeugen des zündfähigen Gemisches erforderliche Verbrennungsluft in die Brennkammer eingespeist werden kann. Um bei Brennstoffeinspeisung bzw. Abdampfung und Verbrennungslufteinspeisung das so erzeugte Verbrennungsluft/Brennstoff-Gemisch zünden zu können, ist im Allgemeinen auch eine Heizanordnung vorgesehen, die dazu in der Lage ist, in einem Bereich der Brennkammer erhöhte Temperaturen zu erzeugen, welche zum Zünden des Gemisches ausreichen. Beispielsweise kann als derartige Heizeinrichtung ein Glühzündstift oder dergleichen vorgesehen sein. Ist die Verbrennung einmal gestartet, so wird durch die bei der Verbrennung entstehenden hohen Temperaturen die Verbrennung selbst aufrecht erhalten, so dass dann der Betrieb dieser Heizeinrichtung bzw. eines Glühzündstifts beendet werden kann.

Bei derartigen Heizgeräten besteht im Allgemeinen sowohl in der Betriebsphase als auch beim Starten und Beenden des Betriebs das Bestreben, einerseits die in die Umgebung abgegebenen Schadstoffemissionen so gering als möglich zu erhalten, andererseits dafür zu sorgen, dass im Bereich des Heizgeräts selbst, insbesondere im Bereich der Brennkammer bzw. des Glühzündstifts oder dergleichen, möglichst wenig Ablagerungen entstehen, welche den nachfolgenden Betrieb beeinträchtigen können.

Bei dem in der Druckschrift US 5 617 995 A offenbarten Abschaltverfahren findet eine erste Abschaltphase während einer Zeitdauer T₁ statt. In dieser Zeit ist, wie beispielsweise in Fig. 11C (und analog in Fig. 13C) gezeigt, die Heizeinrichtung ("glow plug") im Betrieb und verbleibt auch nach dieser Abschaltphase eingeschaltet und zwar während der Zeitdauer T₂ nach Beenden der ersten Abschaltphase.

Es ist die Aufgabe der vorliegenden Erfindung, ein effizientes Verfahren zum Beenden des Heizbetriebs eines Fahrzeugheizgeräts bereitzustellen.

Gemäß der vorliegenden Erfindung wird diese Aufgabe gelöst durch ein Verfahren gemäβ Anspruch 1 zum Beenden des Heizbetriebs eines Fahrzeugheizgeräts, welches Fahrzeugheizgerät eine Brennkammer, eine Brennstoffzuführanordnung zum Zuführen einer einstellbaren. Brennstoffzuführmenge zu der Brennkammer, eine Verbrennungsluftzuführanordnung zum Zuführen einer einstellbaren Verbrennungsluftzuführmenge zu der Brennkammer sowie eine Heizanordnung zum wenigstens lokalen Erwärmen der Brennkammer aufweist, wobei das Verfahren die folgenden Maßnahmen umfasst:
- Erzeugen eines Abschaltbefehls,
- in einer ersten Abschaltphase nach Erzeugung des Abschaltbefehls, Zuführen von Brennstoff zu der Brennkammer,
- am Ende der ersten Abschaltphase Beenden der Brennstoffzufuhr zu der Brennkammer,
- Betreiben der Heizanordnung in der ersten Abschaltphase,
- Betreiben der Verbrennungsluftzuführanordnung in der ersten Abschaltphase.
- Beenden des Betriebs der Heizanordnung am Ende des ersten Abschaltphase.

Wesentlich ist bei der vorliegenden Erfindung, dass auch dann, wenn der Befehl zum Abschalten des Heizgeräts einmal erzeugt worden ist, nicht sofort die Brennstoffzufuhr unterbrochen wird, sondern weiterhin Brennstoff eingespeist wird, so dass die Verbrennung weiterhin beispielsweise mit abnehmender Quantität aufrecht erhalten werden kann und durch die in dieser Phase auch auftretende Erregung der Heizeinrichtung dafür gesorgt werden kann, dass einerseits die bei der absterbenden Verbrennung erzeugten Schadstoffemissionen minimiert werden, gleichzeitig auch die möglicherweise im Bereich der Brennkammer sich ablagernden Verbrennungsrückstände in ihrer Quantität ebenfalls verringert werden.

Das erfindungsgemäße Verfahren wird dadurch mit hoher Effizienz durchgeführt, dass der Betrieb der Heizanordnung am Ende der ersten Abschaltphase beendet wird.

In der Phase, in welcher die Verbrennung allmählich reduziert werden soll, kann beispielsweise vorgesehen sein, dass in der ersten Abschaltphase Brennstoff wenigstens zeitweise in einer Brennstoffzuführmenge zugeführt wird, die im Wesentlichen einer Brennstoffzuführmenge einer der ersten Abschaltphase vorangehenden Betriebsphase entspricht.

Weiterhin ist es möglich, dass in der ersten Abschaltphase Brennstoff wenigstens zeitweise in einer Brennstoffzuführmenge zugeführt wird, die kleiner ist als eine Brennstoffzuführmenge in einer der ersten Abschaltphase vorangehenden Betriebsphase. Hier kann beispielsweise dafür gesorgt werden, dass in der ersten Abschaltphase Brennstoff in einer minimalen Brennstoffzuführmenge zugeführt wird.

Der Übergang in diese Phase, in welcher allmählich die Verbrennung zum Erliegen gebracht werden soll, kann beispielsweise dadurch erlangt werden, dass am Beginn der ersten Abschaltphase die Brennstoffzuführmenge spontan verringert wird.

Bei einer ansteuerungstechnisch vergleichsweise einfach zu realisierenden Variante kann weiter vorgesehen sein, dass am Beginn der ersten Abschaltphase die Brennstoffzuführmenge spontan verringert wird. Alternativ kann für einen definierten allmählichen Übergang in einen verbrennungsfreien Zustand vorgesehen sein, dass die Brennstoffzuführmenge in der ersten Abschaltphase wenigstens zeitweise im Wesentlichen kontinuierlich verringert wird. Bei dieser Variante kann bei kontinuierlicher Verringerung der Brennstoffzuführmenge dafür gesorgt werden, dass in der ersten Abschaltphase die Brennstoffzuführmenge auf Null verringert wird. Alternativ ist es selbstverständlich auch hier möglich, dass in der ersten Abschaltphase die Brennstoffzuführmenge auf eine vorbestimmte End-Brennstoffzuführmenge verringert wird, wobei auch hier vorzugsweise vorgesehen sein kann, dass die End-Brennstoffzuführmenge eine minimale Brennstoffzuführmenge ist. Wird durch die in der ersten Abschaltphase weiter anhaltende Brennstoffzufuhr kein Übergang zu einem Zustand erlangt, in welchem die Brennstoffzuführmenge bei Null ist, so kann gemäß einem weiteren Aspekt der Erfindung vorgesehen sein, dass am Ende der ersten Abschaltphase die Brennstoffzufuhr spontan beendet wird.

Weiter kann das erfindungsgemäße Verfahren so durchgeführt werden, dass in der ersten Abschaltphase die Verbrennungsluftzuführmenge verringert wird. Dabei kann eine weitere Minimierung des Schadstoffausstoßes dadurch erlangt werden, dass in der ersten Abschaltphase die Brennstoffzuführmenge und die Verbrennungsluftzuführmenge derart verringert werden, dass ein im Wesentlichen gleich bleibendes Verhältnis von Verbrennungsluftzuführmenge zu Brennstoffzuführmenge vorgesehen wird. Durch diese Maßnahme kann also dafür gesorgt werden, dass die Verbrennung auch in der Phase, in welcher diese allmählich zum Erliegen gebracht werden soll, bei einem Lambda-Wert abläuft, der auch im normalen Betrieb vorgesehen ist und hinsichtlich eines Schadstoffausstoßes beispielsweise optimiert ist. Auch hierbei kann vorgesehen sein, dass in der ersten Abschaltphase die Verbrennungsluftzuführmenge im Wesentlichen kontinuierlich verringert wird, wobei vorzugsweise eine Verringerung mit konstanter Rate erfolgt.

Um auch nach dem Beenden der Verbrennung dafür zu sorgen, dass im Bereich der Brennkammer sich möglicherweise noch aufhaltende Verbrennungsrückstände oder Brennstoffrückstände nicht zu Ablagerungen führen, kann weiter vorgesehen sein, dass in einer an die erste Abschaltphase anschließenden zweiten Abschaltphase die Verbrennungsluftzuführmenge größer als Null ist. Hier ist es beispielsweise möglich, dass in der zweiten Abschaltphase die Verbrennungsluftzuführmenge wenigstens zeitweise konstant ist.

Gemäß einem weiteren Aspekt betrifft die vorliegende Erfindung ein Verfahren zum Beenden des Heizbetriebs eines Fahrzeugheizgeräts, welches Fahrzeugheizgeräteine Brennkammer, eine Brennstoffzuführanordnung zum Zuführen einer einstellbaren Brennstoffzuführmenge zu der Brennkammer, eine Verbrennungsluftzuführanordnung zum Zuführen einer einstellbaren Verbrennungsluftzuführmenge zu der Brennkammer sowie eine Heizanordnung zum wenigstens lokalen Erwärmen der Brennkammer aufweist, bei welchem Verfahren beim Übergang des Fahrzeugheizgeräts zu einem Außerbetriebszustand phasenweise gleichzeitig Brennstoff und Verbrennungsluft zugeführt werden und die Heizanordnung betrieben wird.

Die vorliegende Erfindung wird nachfolgend mit Bezug auf die beiliegenden Figuren beschrieben. Es zeigen:
- Fig. 1: eine prinzipielle Darstellung eines Fahrzeugheizgeräts, bei welchem das erfindungsgemäße Verfahren realisiert sein kann;
- Fig. 2 bis 5: im Diagramm a) den zeitlichen Verlauf einer Brennstoffzuführmenge Abschalten eines Heizgeräts; im Diagramm b) den zeitlichen Verlauf der Erregung einer Heizeinrichtung beim Abschalten des Heizgeräts; im Diagramm c) den zeitlichen Verlauf einer Verbrennungsluftzuführmenge beim Abschalten des Heizgeräts.

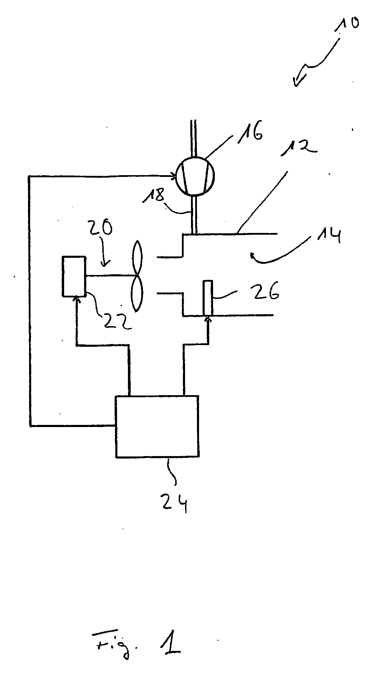

In Fig. 1 ist ein Fahrzeugheizgerät 10 in prinzipieller Hinsicht dargestellt. Das Heizgerät 10 umfasst ein Brennkammergehäuse 12, in welchem eine Brennkammer 14 gebildet ist. Durch eine Brennstoffförderanordnung 16, beispielsweise Dosierpumpe oder dergleichen, wird über eine Brennstoffleitung 18 flüssiger Brennstoff, also beispielsweise Benzin oder Diesel, in die Brennkammer 14 eingeleitet. Bei Aufbau des Heizgeräts 10 nach Art eines Verdampferbrenners, ist an der Innenwandung des Brennkammergehäuses 12 ein poröses Verdampfermedium vorgesehen, in welches der flüssige Brennstoff eingeleitet wird und von welchem dieser dann in die Brennkammer 14 abdampft. Bei Aufbau des Heizgeräts 10 als Zerstäuberbrenner wird der Brennstoff über eine Zerstäubedüse als fein zerstäubter Brennstoffnebel in die Brennkammer 14 abgegeben.

Es ist ferner eine Heizluftförderanordnung 20, beispielsweise in Form eines Heizluftgebläses vorgesehen, dessen Antrieb 22 ebenso wie die Brennstoffförderanordnung 16 unter der Ansteuerung eines Steuergeräts 24 steht.

Weiter ist eine Heizanordnung 26 vorgesehen, beispielsweise als Glühzündstift, als Heizwendel oder dergleichen ausgestaltet, die ebenfalls unter der Ansteuerung des Steuergeräts 24 steht.

Bei Einspeisung von Verbrennungsluft durch die Verbrennungluftzuführanordnung 20 und Brennstoff durch die Brennstoffzuführanordnung 16 wird in der Brennkammer 14 also ein zündfähiges Gemisch aus Verbrennungsluft und Brennstoffdampf gebildet, das durch Betreiben bzw. Erregen der Heizanordnung 26 dann gezündet werden kann. Nach dem Zünden und bei ablaufender Verbrennung wird im allgemeinen die Heizanordnung 26 wieder abgeschaltet.

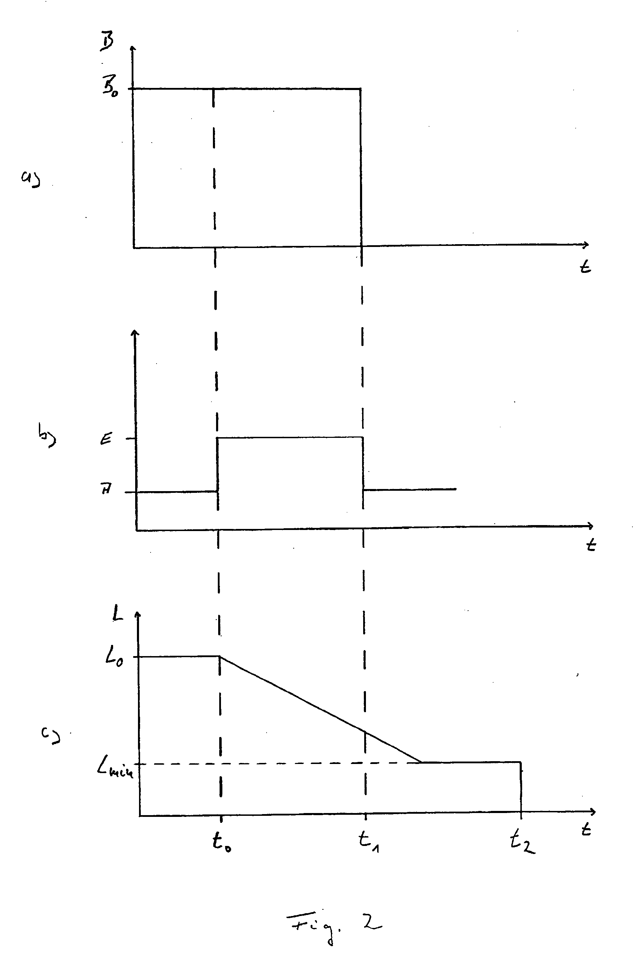

Um bei einem derartigen Heizgerät 10 dafür zu sorgen, dass nicht nur während des Verbrennungsbetriebs, sondern insbesondere auch beim Beenden des Verbrennungsbetriebs der Schadstoffausstoß minimal ist und die Gefahr der Ablagerung von Verbrennungsrückständen im Bereich der Brennkammer 14, insbesondere auch im Bereich der Heizanordnung 26, ebenso verringert ist, wird erfindungsgemäß eine Abschaltprozedur durchgeführt, die nachfolgend mit Bezug auf die Fig. 2 beschrieben wird.

In Fig. 2 zeigt das Diagramm a) über die Zeit aufgetragen die Brennstoffzuführmenge B, also das beispielsweise pro Zeiteinheit durch die Brennstoffzuführanordnung 16 geförderte und somit zur Brennkammer 14 geleitete Brennstoffvolumen. Insofern repräsentiert also dieses Diagramm a) auch die Brennstoffförderleistung bzw. Brennstoffförderkapazität der Brennstoffzuführanordnung 16. Das Diagramm b) veranschaulicht über die Zeit aufgetragen den Status der Heizanordnung 26, wobei hier in vereinfachter Art und Weise der Status entweder als "A", also AUS, oder "E", also EIN, dargestellt ist. Insbesondere dann, wenn die Heizanordnung 26 auch zur Vorwärmung der Brennkammer 14 genutzt werden kann, ist es selbstverständlich möglich, diese auch in Zwischenstufen mit mittlerer Heizleistung zu betreiben. Das Diagramm c) veranschaulicht über die Zeit aufgetragen die Verbrennungsluftzuführmenge L, also beispielsweise das von der Verbrennungsluftzuführanordnung 20 pro Zeiteinheit geförderte Verbrennungsluftvolumen. Auch dieses Diagramm veranschaulicht somit im Wesentlichen die Förderleistung bzw. Förderkapazität der Verbrennungsluftzuführanordnung 20.

Es sei zunächst angenommen, dass das Heizgerät 10 vor dem Zeitpunt t₀ in einem normalen Verbrennungsbetrieb ist, in welchem eine Brennstoffeinzuführmenge B₀ in die Brennkammer 14 geleitet wird und eine Verbrennungsluftzuführmenge L₀ in die Brennkammer 14 eingeleitet wird. Hier kann beispielsweise die Brennstoffzuführmenge B₀ eine maximale Fördermenge, d.h. bei maximaler Förderleistung der Brennstoffzuführanordnung 16 geförderte Brennstoffmenge sein. In dieser Verbrennungsbetriebsphase ist, wie vorangehend bereits ausgeführt, die Heizanordnung 26 abgeschaltet, da die zur Verbrennung erforderlichen Temperaturen durch die ablaufende Verbrennung selbst bereitgestellt werden.

Zum Zeitpunkt t₀ wird dann beispielsweise durch manuelle Eingabe, durch Vorgabe eines Zeitglieds oder dergleichen in dem Steuergerät 24 ein Abschaltbefehl erzeugt oder ein derartiger Befehl dem Steuergerät 24 zugeführt, so dass dann durch dieses Steuergerät 24 Ansteuermaßnahmen vorgenommen werden, um das Heizgerät 10 in einen Außerbetriebszustand bzw. Abschaltzustand zu überführen. Ab dem Zeitpunkt t₀ beginnt also eine erste Abschaltphase, in welcher zunächst die Heizanordnung 26 wieder erregt wird, d.h. eingeschaltet wird, und in welcher mit der Brennstoffzufuhr fortgefahren wird. D.h. bei Erzeugung des Abschaltbefehls wird nicht die Brennstoffzufuhr beendet, sondern es wird in dieser ersten Abschaltphase weiterhin Brennstoff in die Brennkammer 14 eingespeist. In dem in Fig. 2 veranschaulichten Beispiel erkennt man, dass weiterhin die in der vorangehenden Betriebsphase auch geförderte Brennstoffzuführmenge B in die Brennkammer 14 eingespeist wird. Die Verbrennungsluftzuführanordnung wird durch das Steuergerät 24 derart angesteuert, dass die in die Brennkammer 14 eingeleitete Verbrennungsluftzuführmenge von der in der vorangehenden Betriebsphase geförderten Menge L₀ allmählich abnimmt, beispielsweise mit konstanter Rate abnimmt.

Am Ende dieser ersten Abschaltphase, also zum Zeitpunkt t₁, wird die Brennstoffzufuhr spontan beendet, so dass zu diesem Zeitpunkt t₁ beispielsweise durch spontanes Beenden des Betriebs der Brennstoffzuführanordnung 16 oder durch entsprechendes Ansteuern eines Abschließventils die Brennstoffzuführmenge B auf Null sinkt. Gleichzeitig mit dem Beenden der Brennstoffzufuhr am Ende dieser ersten Abschaltphase wird auch die Erregung der Heizanordnung 26 beendet, so dass diese zum Zeitpunkt t₁ wieder in den Abschaltzustand übergeht. Die Verbrennungsluftzuführmenge L ist bereits deutlich abgesunken, weist jedoch am Ende dieser ersten Abschaltphase immer noch einen von Null verschiedenen Wert auf.

In einer auf den Zeitpunkt t₁ folgenden zweiten Abschaltphase wird die Verbrennungsluftzuführmenge L zunächst noch weiter verringert, bis sie einen minimalen Wert Lₘᵢₙ annimmt und bis zu einem Zeitpunkt t₂ dann auf diesem minimalen Wert gehalten wird. Zum Zeitpunkt t₂ist dann auch die zweite Abschaltphase und damit der gesamte Abschaltvorgang beendet, zu diesem Zeitpunkt wird dann auch der Betrieb der Verbrennungsluftzuführanordnung 20 beendet, so dass die Verbrennungsluftzuführmenge L auf den Wert Null absinkt.

Durch die vorangehend beschriebene Prozedur, bei welcher während einer ersten Abschaltphase weiterhin Brennstoff in die Brennkammer 14 eingeleitet wird und gleichzeitig auch die Heizanordnung 26, also beispielsweise ein Glühzündstift, erregt wird, wird dafür gesorgt, dass insbesondere im Bereich dieser Heizanordnung 26 das Auftreten von Ablagerungen verhindert wird. Hierzu trägt insbesondere die weiter anhaltende auch durch Erregen der Heizanordnung 26 induzierte Verbrennung bei. Weiterhin sorgt das anhaltende Betreiben der Verbrennungsluftzuführanordnung 20 auch nach dem Beenden der ersten Abschaltphase, also nach dem Beenden der Brennstoffzufuhr dafür, dass noch im Bereich der Brennkammer 14 vorhandene Brennstoffreste oder Verbrennungsproduktreste aus der Brennkammer 14 herausgefördert werden und sich dort nicht ablgern können. Somit sorgt bei vermindertem Schadstoffausstoß in der Abschaltphase diese erfindungsgemäße Abschaltprozedur durch Verhindern von Ablagerungen für eine erhöhte Standzeit des gesamten Heizgeräts 10.

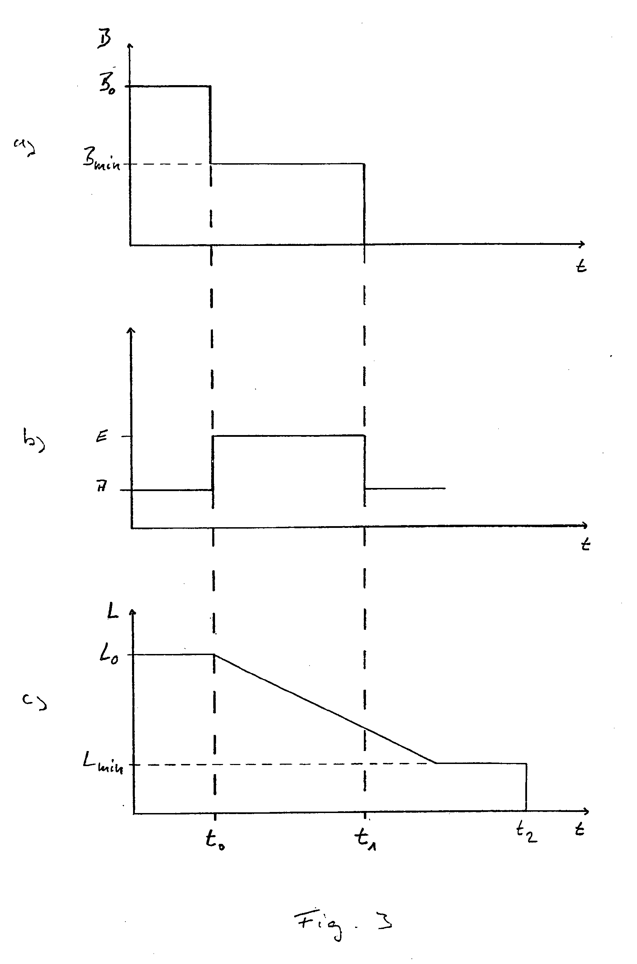

Eine alternative Prozedur ist in Fig. 3 veranschaulicht. Man erkennt in Fig. 3, dass in der ersten Abschaltphase, also zwischen den Zeitpunkten t₀ und t₁ zwar weiterhin Brennstoff zugeführt wird, dass jedoch die Brennstoffzuführmenge B auf einen bezüglich der im vorangehenden Heizbetrieb vorhandenen Brennstoffzufürhmenge B₀ verminderten Wert Bₘᵢₙ gesetzt wird, welcher beispielsweise der minimalen Brennstofffördermenge der Brennstoffzuführanordnung 16 entsprechen kann. Am Ende der ersten Abschaltphase, d.h. zum Zeitpunt t₁, wird dann auch bei dieser Prozedur die Brennstoffzufuhr beendet, gleichzeitig mit dem Beenden des Betriebs der Heizanordnung 26. Durch das anhaltende Zuführen von Verbrennungsluft in der zweiten Abschaltphase, also bis zum Zeitpunkt t₂, kann auch hier dafür gesorgt werden, dass Verbrennungsrückstände bzw. Brennstoffrückstände aus der Brennkammer 14 herausgespült werden.

Es sei darauf hingewiesen, dass selbstverständlich die Verringerung der Brennstoffzuführmenge in der ersten Abschaltphase bzw. am Beginn derselben auch in mehreren Schritten erfolgen kann, so dass sich ein mehrstufiger Übergang ergibt. Weiter sei darauf hingewiesen, dass selbstverständlich bei den vorangehend beschriebenen Ausgestaltungsvarianten der erfindungsgemäßen Prozedur ebenso wie bei dem nachfolgend noch zu beschreibenden Ausgestaltungsvarianten die Erregung der Heizanordnung 26 abgestimmt sein kann auf die erste Abschaltphase, d.h. am Beginn der ersten Abschaltphase beginnen kann und am Ende der ersten Abschaltphase wieder beendet werden kann, wie dies in den Figuren dargestellt ist. Selbstverständlich ist es auch möglich, die Errgeung beispielsweise bereits vor dem Reduzieren der Brennstoffzuführmenge B zu starten, so dass beispielsweise nach Erzeugung des Abschaltbefehls die Heizanordnung 26 sofort eingeschaltet wird, die Verringerung der Brennstoffzuführmenge B jedoch erst verzögert auftritt. Auch am Ende der ersten Abschaltphase kann das Erregen der Heizanordnung 26 bereits vor dem vollständigen Beenden der Brennstoffzufuhr auftreten oder aber auch vorzugsweise erst danach. Dies hat zur Folge, dass beim Beenden der Brennstoffzufuhr, jedoch noch weiter erregter Heizanordnung 26 noch vorhandene Brennstoffreste durch die im Bereich der Heizanordnung 26 bzw. der Brennkammer 14 bereitgestellten hohen Temperaturen sicher verbrannt werden können. Weiter ist es auch selbstverständlich möglich, dass die Verbrennungsluftzuführmenge L in der ersten Abschaltphase bereits auf den Wert Lₘᵢₙ reduziert wird und dann in der gesamten zweiten Abschaltphase, also bis zum vollständigen Beenden der Verbrennungsluftzufuhr, eine im Wesentlichen konstante Verbrennungsluftzuführmenge L vorgesehen wird.

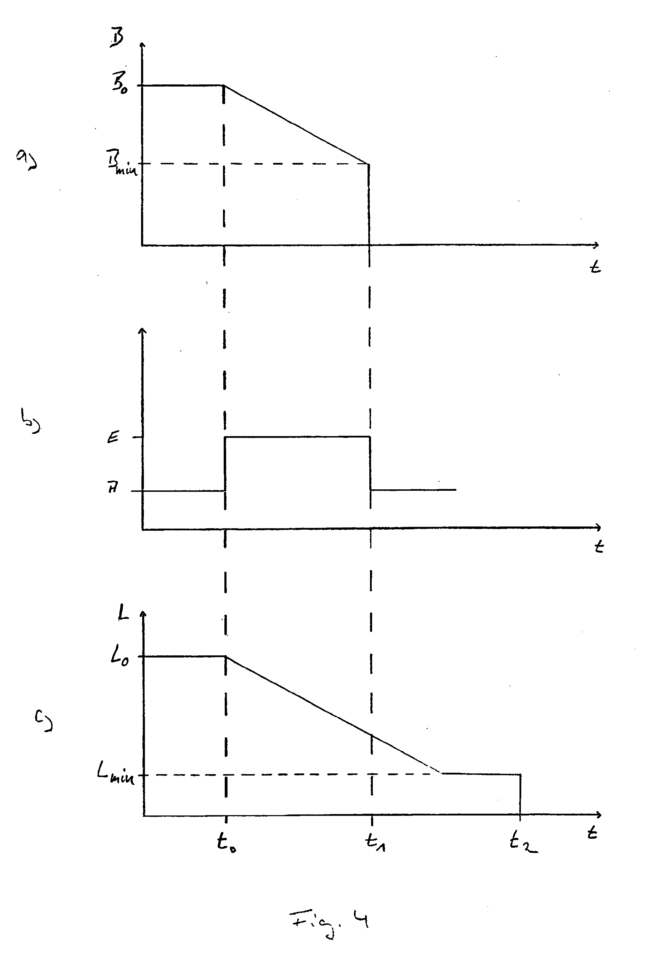

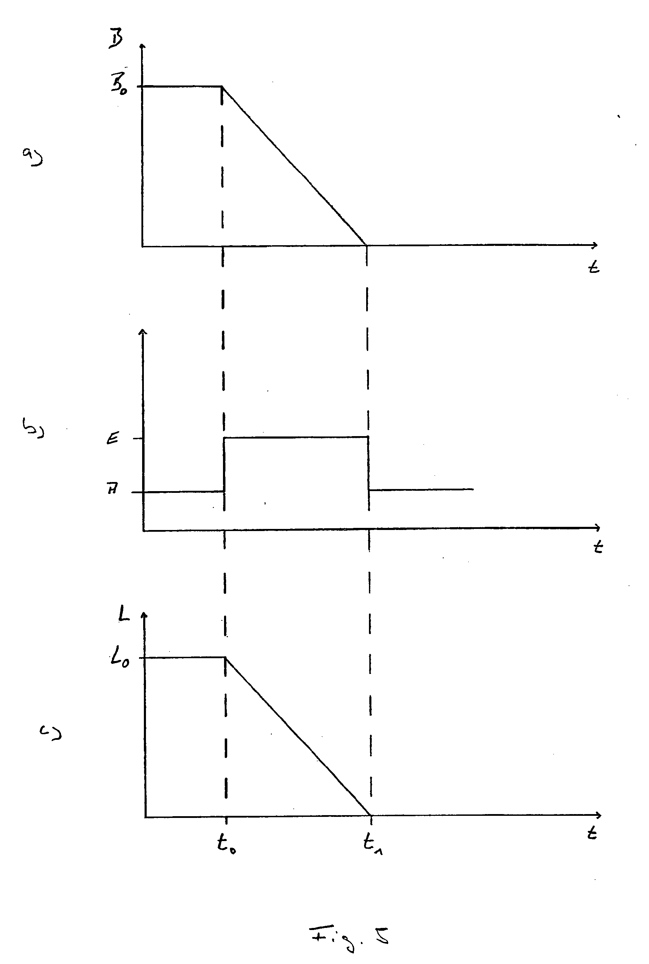

Eine weitere alternative erfindungsgemäße Prozedur ist in Fig. 4 dargestellt. Man erkennt hier, dass in der ersten Abschaltphase die Brennstoffzuführmenge B nicht spontan bzw. stufenartig sondern kontinuierlich, vorzugsweise mit konstanter Abnahmerate verringert wird, bis beispielsweise am Ende der ersten Abschaltphase, also zum Zeitpunkt t₁, eine minimale Brennstoffzuführmenge Bₘᵢₙ erreicht ist. Zum Zeitpunkt t₁ wird dann die Brennstoffzufuhr wieder spontan eingestellt. Es sei auch hier darauf hingewiesen, dass die Abnahme der Brennstoffzuführmenge B auch so erfolgen kann, dass bereits vor dem Zeitpunkt t₁ in einen Zustand konstanter Brennstoffzuführmenge übergegangen werden kann, dass also die kontinuierliche rampenartige Abnahme der Brennstoffzuführmenge nur während einer bestimmten Zeitdauer der ersten Abschaltphase auftritt, beispielsweise auch am Ende, während vorangehend noch mit konstanter Rate Brennstoff zugeführt wird. Durch die in Fig. 4 dargestellte Prozedur wird sichergestellt, dass die Verringerung der Brennstoffzuführmenge B besser auf die Verringerung der Verbrennungsluftzuführmenge L abgestimmt ist. Dies hat zur Folge, dass das Verhältnis von Verbrennungsluftzuführmenge L zu Brennstoffzuführmenge B näher bei einem für den normalen Betrieb vorgesehenen Verhältnis bleibt, das auch hinsichtlich der Schadstoffminimierung optimiert ist. In Fig. 5 ist eine Variante gezeigt, bei welcher während der gesamten ersten Abschaltphase, also zwischen den Zeitpunkten t₀ und t₁ dieses Verhältnis L/B im Wesentlichen konstant bleibt, so dass dann, wenn die Brennstoffzuführmenge B am Ende der ersten Abschaltphase bei Null ist, auch die Verbrennungsluftzuführmenge L bei Null ist.

Auch hier sei darauf hingewiesen, dass selbstverständlich nur in einem oder mehreren Abschnitten der ersten Abschaltphase die kontinuierliche Abnahme der Brennstoffzuführmenge B und entsprechend eine kontinuierliche Abnahme der Verbrennungsluftzuführmenge L vorgesehen sein können, während in anderen Zeitabschnitten beispielsweise mit konstanter Brennstoffzuführmenge B und entsprechend konstanter Verbrennungsluftzuführmenge L gearbeitet wird. Weiterhin ist es insbesondere bei der in Fig. 5 dargestellten Variante der erfindungsgemäßen Prozedur auch möglich, dass nach der ersten Abschaltphase, also nach Beenden der Brennstoffzufuhr, die Verbrennungsluftzuführanordnung 20 wieder aktiviert wird, um dafür zu sorgen, dass im Bereich der Brennkammer 14 noch vorhandene Verbrennungsrückstände bzw. Brennstoffrückstände zuverlässig ausgespült werden.

Durch die erfindungsgemäßen Prozeduren beim Abschalten eines in einem Fahrzeug vorgesehenen Heizgeräts 10 wird also durch verminderten Schadstoffausstoß und insbesondere verminderte Verbrennungsrückstandsablagerung im Bereich der Brennkammer 14 für einen verbesserten Betrieb, insbesondere auch eine verlängerte Standzeit des Heizgeräts 10 gesorgt. Von Bedeutung ist das elementare Prinzip der vorliegenden Erfindung, dass beim Übergang in den Abschaltzustand für eine bestimmte Phase gleichzeitig noch Brennstoff und Verbrennungsluft zugeführt werden, während auch die Heizanordnung erregt ist, um für eine noch andauernde, allmählich aber abnehmende Verbrennung zu sorgen.

## Patentansprüche

1. Verfahren zum Beenden des Heizbetriebs eines Fahrzeugheizgeräts (10), welches Fahrzeugheizgerät (10) eine Brennkammer (14), eine Brennstoffzuführanordnung (16) zum Zuführen einer einstellbaren Brennstoffzuführmenge zu der Brennkammer (14), eine Verbrennungsluftzuführanordnung (20) zum Zuführen einer einstellbaren Verbrennungsluftzuführmenge zu der Brennkammer (14) sowie eine Heizanordnung (26) zum wenigstens lokalen Erwärmen der Brennkammer (14) aufweist, wobei das Verfahren die folgenden Maßnahmen umfasst:
- Erzeugen eines Abschaltbefehls,
- in einer ersten Abschaltphase nach Erzeugung des Abschaltbefehls, Zuführen von Brennstoff zu der Brennkammer (14),
- am Ende der ersten Abschaltphase Beenden der Brennstoffzufuhr zu der Brennkammer (14),
- Betreiben der Heizanordnung (26) in der ersten Abschaltphase,
- Betreiben der Verbrennungsluftzuführanordnung (20) in der ersten Abschaltphase,
**dadurch gekennzeichnet, dass** der Betrieb der Heizanordnung (26) am Ende der ersten Abschaltphase beendet wird.

2. Verfahren nach Anspruch 1,
**dadurch gekennzeichnet, dass** in der ersten Abschaltphase Brennstoff wenigstens zeitweise in einer Brennstoffzuführmenge (B) zugeführt wird, die im Wesentlichen einer Brennstoffzuführmenge (B₀) einer der ersten Abschaltphase vorangehenden Betriebsphase entspricht.

3. Verfahren nach Anspruch 1 oder 2,
**dadurch gekennzeichnet, dass** in der ersten Abschaltphase Brennstoff wenigstens zeitweise in einer Brennstoffzuführmenge (B) zugeführt wird, die kleiner ist als eine Brennstoffzuführmenge (B₀) in einer der ersten Abschaltphase vorangehenden Betriebsphase.

4. Verfahren nach Anspruch 3,
**dadurch gekennzeichnet, dass** in der ersten Abschaltphase Brennstoff in einer minimalen Brennstoffzuführmenge (Bₘᵢₙ) zugeführt wird.

5. Verfahren nach Anspruch 3 oder 4,
**dadurch gekennzeichnet; dass** am Beginn der ersten Abschaltphase die Brennstoffzuführmenge (B) spontan verringert wird.

6. Verfahren nach einem der Ansprüche 2 bis 5,
**dadurch gekennzeichnet, dass** in der ersten Abschaltphase Brennstoff in einer im Wesentlichen konstanten Brennstoffzuführmenge (B) zugeführt wird.

7. Verfahren nach einem der Ansprüche 1 bis 6,
**dadurch gekennzeichnet, dass** die Brennstoffzuführmenge (B) in der ersten Abschaltphase wenigstens zeitweise im Wesentlichen kontinuierlich verringert wird.

8. Verfahren nach Anspruch 7,
**dadurch gekennzeichnet, dass** die Brennstoffzuführmenge (B) mit im Wesentlichen konstante Rate verringert wird.

9. Verfahren nach Anspruch 7 oder 8,
**dadurch gekennzeichnet, dass** in der ersten Abschaltphase die Brennstoffzuführmenge (B) auf Null verringert wird.

10. Verfahren nach Anspruch 7 oder 8,
**dadurch gekennzeichnet, dass** in der ersten Abschaltphase die Brennstoffzuführmenge (B) auf eine vorbestimmte End-Brennstoffzuführmenge verringert wird.

11. Verfahren nach Anspruch 10,
**dadurch gekennzeichnet, dass** die End-Brennstoffzuführmenge eine minimale Brennstoffzuführmenge, (Bₘᵢₙ) ist.

12. Verfahren nach einem der Ansprüche 1, bis 11,
**dadurch gekennzeichnet, dass** am Ende der ersten Abschaltphase die Brennstoffzufuhr spontan beendet wird.

13. Verfahren nach einem der vorangehenden Ansprüche,
**dadurch gekennzeichnet, dass** in der ersten Abschaltphase die Verbrennungsluftzuführmenge (L) verringert wird.

14. Verfahren nach Anspruch 13,
**dadurch gekennzeichnet, dass** in der ersten Abschaltphase die Brennstoffzuführmenge und die Verbrennungsluftzuführmenge (L) derart verringert werden, dass ein im Wesentlichen gleich bleibendes Verhältnis von Verbrennungsluftzuführmenge (L) zu Brennstoffzuführmenge (B) vorgesehen wird.

15. Verfahren nach Anspruch 13 oder 14,
**dadurch gekennzeichnet, dass** in der ersten Abschaltphase die Verbrennungsluftzuführmenge (L) im Wesentlichen kontinuierlich verringert wird.

16. Verfahren nach Anspruch 15,
**dadurch gekennzeichnet, dass** die Verbrennungsluftzuführmenge (L) mit im Wesentlichen konstanter Rate verringert wird.

17. Verfahren nach einem der Ansprüche 13 bis 16,
**dadurch gekennzeichnet, dass** in einer an die erste Abschaltphase anschließenden zweiten Abschaltphase die Verbrennungsluftzuführmenge (L) größer als Null ist.

18. Verfahren nach Anspruch 17,
**dadurch gekennzeichnet, dass** in der zweiten Abschaltphase die Verbrennungsluftzuführmenge (L) wenigstens zeitweise konstant ist.

## Claims

1. A method for terminating the heating operation of a vehicle heating device (10), the vehicle heating device (10) comprising a combustion chamber (14), a fuel supply arrangement (16) for inserting an adjustable fuel supply quantity into said combustion chamber (14), a combustion air supply arrangement (20) for inserting an adjustable combustion air supply quantity into said combustion chamber (14) as well as a heating arrangement (26) for heating at least locally said combustion chamber (14), the method comprising the following measures:
- generating a switch-off command,
- in a first switch-off phase after generating said switch-off command, inserting fuel into said combustion chamber (14),
- at the end of said first switch-off phase stopping the fuel supply towards said combustion chamber (14),
- operating said heating arrangement (26) in said first switch-off phase,
- operating said combustion air supply arrangement (20) in the first switch-off phase,
**characterized by** the operation of said heating arrangement (26) being stopped at the end of said first switch-off phase.

2. The method according to claim 1,
**characterized in that** in said first switch-off phase fuei is inserted at least temporarily in a fuel supply quantity (B) corresponding substantially to a fuel supply quantity (B₀) of an operating phase preceding the first switch-off phase.

3. The method according to claim 1 or 2,
**characterized in that** in the first switch-off phase fuel is inserted at least temporarily in a fuel supply quantity (B) which is smaller than the fuel supply quantity (B₀) of an operating phase preceding the first switch-off phase.

4. The method according to claim 3,
**characterized in that** in the first switch-off phase fuel is inserted in a minimum fuel supply quantity (Bₘᵢₙ).

5. The method according to claim 3 or 4,
**characterized in that** in the beginning of said first switch-off phase said fuel supply quantity (B) is reduced spontaneously.

6. The method according to one of claims 2 to 5,
**characterized in that** in the first switch-off phase fuel is supplied in a substantially constant fuel supply quantity (B).

7. The method according to one of claims 1 to 6,
**characterized in that** in said first switch-off phase said fuel supply quantity (B) is at least temporarily reduced in a substantially continuous manner.

8. The method according to claim 7,
**characterized in that** said fuel supply quantity (B) is reduced with a substantially constant rate.

9. The method according to claim 7 or 8,
**characterized in that** in the first switch-off phase said fuel supply quantity (B) is reduced to zero.

10. The method according to claim 7 or 8,
**characterized in that** in the first switch-off phase said fuel supply quantity (B) is reduced to a predetermined final fuel supply quantity.

11. The method according to claim 10,
**characterized in that** said final fuel supply quantity is a minimum fuel supply quantity (Bₘᵢₙ).

12. The method according to one of claims 1 to 11,
**characterized in that** at the end of the first switch-off phase the fuel supply is stopped spontaneously.

13. The method according to one of the preceding claims,
**characterized in that** in the first switch-off phase said combustion air supply quantity (L) is reduced.

14. The method according to claim 13,
**characterized in that** in the first switch-off phase said fuel supply quantity and said combustion air supply quantity (L) are reduced so that a substantially constant ratio of combustion air supply quantity (L) and fuel supply quantity (B) is provided.

15. The method according to claim 13 or 14,
**characterized in that** in the first switch-off phase said combustion air supply quantity (L) is reduced substantially continuously.

16. The method according to claim 15,
**characterized in that** said combustion air supply quantity (L) is reduced at a substantially constant rate.

17. The method according to one of claims 13 to 16,
**characterized in that** in a second switch-off phase succeeding the first switch-off phase the combustion air supply quantity (L) is greater than zero.

18. The method according to claim 17,
**characterized in that** in the second switch-off phase said combustion air supply quantity (L) is at least temporarily constant.

## Revendications

1. Un procédé pour arrêter l'opération de chauffage d'un dispositif de chauffage pour un véhicule (10), le dispositif de chauffage pour un véhicule (10) comprenant une chambre de combustion (14), un arrangement d'alimentation en combustible (16) pour insérer une quantité d'alimentation en combustible ajustable dans la chambre de combustion (14), un arrangement d'alimentation en air de combustion (20) pour insérer une quantité d'alimentation en air de combustion ajustable dans la chambre de combustion (14) ainsi qu'un arrangement de chauffage (26) pour chauffer au moins localement la chambre de combustion (14), le procédé comprenant les mesures suivantes :
- générer une première commande d'arrêt,
- dans une première phase d'arrêt, après la production de la commande d'arrêt, arrêter l'insertion de combustible dans la chambre de combustion (14),
- opérer l'arrangement de chauffage (26) dans la première phase d'arrêt,
- opérer l'arrangement d'alimentation en air de combustion (20) dans la première phase d'arrêt,
**caractérisé par** l'opération de l'arrangement de chauffage (26) étant arrêtée à la fin de la première phase d'arrêt.

2. Le procédé selon la revendication 1,
**caractérisé en ce que** dans la première phase d'arrêt le combustible est inséré au moins temporairement dans une quantité d'alimentation en combustible (B) correspondant essentiellement à une quantité d'alimentation en combustible (B₀) d'une phase d'opération précédant la première phase d'arrêt.

3. Le procédé selon la revendication 1 ou 2,
**caractérisé en ce que** dans la première phase d'arrêt le combustible est inséré au moins temporairement dans une quantité d'alimentation en combustible (B) qui est plus petite qu'une quantité d'alimentation en combustible (B₀) d'une phase d'opération précédant la première phase d'arrêt.

4. Le procédé selon la revendication 3,
**caractérisé en ce que** dans la première phase d'arrêt le combustible est inséré dans une quantité d'alimentation en combustible minimale (Bₘᵢₙ).

5. Le procédé selon la revendication 3 ou 4,
**caractérisé en ce qu'**au début de la première phase d'arrêt la quantité d'alimentation en combustible (B) es réduite spontanément.

6. Le procédé selon une des revendications 2 à 5,
**caractérisé en ce que** dans la première phase d'arrêt le combustible est inséré dans une quantité d'alimentation en combustible (B) essentiellement constante.

7. Le procédé selon une des revendications 1 à 6,
**caractérisé en ce que** dans la première phase d'arrêt la quantité d'alimentation en combustible (B) est au moins temporairement réduite d'une manière essentiellement continue.

8. Le procédé selon la revendication 7,
**caractérisé en ce que** la quantité d'alimentation en combustible (B) est réduite à une vitesse essentiellement constante.

9. Le procédé selon la revendication 7 ou 8,
**caractérisé en ce que** dans la première phase d'arrêt la quantité d'alimentation en combustible (B) est réduite à zéro.

10. Le procédé selon la revendication 7 ou 8,
**caractérisé en ce que** dans la première phase d'arrêt la quantité d'alimentation en combustible (B) est réduite à une quantité d'alimentation en combustible finale.

11. Le procédé selon la revendication 10,
**caractérisé en ce que** la quantité d'alimentation en combustible finale est une quantité d'alimentation en combustible minimale (Bₘᵢₙ)·

12. Le procédé selon une des revendications 1 à 11,
**caractérisé en ce que** à la fin de la première phase d'arrêt l'alimentation en combustible est arrêtée spontanément.

13. Le procédé selon une des revendications précédentes,
**caractérisé en ce que** dans la première phase d'arrêt la quantité d'alimentation en air de combustion (L) est réduite.

14. Le procédé selon la revendication 13,
**caractérisé en ce que** dans la première phase d'arrêt la quantité d'alimentation en combustible et la quantité d'alimentation en air de combustion (L) sont réduites tel qu'un rapport essentiellement constant entre la quantité d'alimentation en air de combustion (L) et la quantité d'alimentation en combustible (B) est prévu.

15. Le procédé selon la revendication 13 ou 14,
**caractérisé en ce que** dans la première phase d'arrêt la quantité d'alimentation en air de combustion (L) est réduite d'une manière essentiellement continue.

16. Le procédé selon la revendication 15,
**caractérisé en ce que** la quantité d'alimentation en air de combustion (L) est réduite à une vitesse essentiellement constante.

17. Le procédé selon une des revendications 13 à 18,
**caractérisé en ce que** dans une seconde phase d'arrêt succédant la première phase d'arrêt la quantité d'alimentation en air de combustion (L) est supérieure à zéro.

18. Le procédé selon la revendication 17,
**caractérisé en ce que** dans la seconde phase d'arrêt la quantité d'alimentation en air de combustion (L) est au moins temporairement constante.
